# DEMANDE DE BREVET EUROPEEN

(11) **EP 4 480 546 A1**
(43) Date de publication de la demande: **25.12.2024**
(21) Numéro de dépôt: 24180064.8
(22) Date de dépôt: 04.06.2024
(51) Int. Cl.: A62B 1/14

(54) **DISPOSITIF DE BLOCAGE DE CORDE ET PROCÉDÉ D'UTILISATION**

(30) Priorité: 21.06.2023 FR 2306396
(71) Demandeur: Zedel, 38920 Crolles (FR)
(72) Inventeur: CHABOD, Pierre-Olivier, 38530 Pontcharra (FR); QUILLARD, Christophe, 38320 Eybens (FR)
(74) Mandataire: Talbot, Alexandre

(57) **Abrégé**

Un dispositif de blocage de corde comporte un corps (1) avec une butée (2) et une came (5) pivotante. Un premier ressort (6) a deux extrémités liées fonctionnellement et respectivement à la came (5) et au corps par une première liaison mécanique et une deuxième liaison mécanique. Lorsque le commutateur (10) est dans une position d'actionnement, le premier ressort (6) s'oppose à un éloignement entre la came (5) et la butée (2). Lorsque le commutateur (10) est dans une position de déverrouillage, le premier ressort (6) ne s'oppose à un éloignement entre la came (5) et la butée (2) ou s'oppose à un rapprochement entre la came (5) et la butée (2). Dans la position de déverrouillage, le commutateur (10) supprime l'une des première et deuxième liaisons mécaniques ou intervertit les deux liaisons mécaniques.

## Description

### Domaine technique

L'invention concerne un dispositif de blocage de corde et un procédé d'utilisation d'un dispositif de blocage de corde.

### État de la technique

En alpinisme et dans d'autres activités de montagne, il est courant de posséder un dispositif d'assurage à l'intérieur duquel passe une corde qui relie le grimpeur et l'assureur. Les dispositifs d'assurage doivent répondre à deux problématiques distinctes. Le dispositif d'assurage doit être facile à utiliser, c'est-à-dire qu'il doit être facile de faire circuler la corde dans le dispositif d'assurage afin de fournir de la corde à celui qui grimpe ou au contraire il doit être facile de ravaler rapidement la corde. Il y a donc besoin d'avoir un chemin de circulation de corde qui présente un frottement faible.

Il est également nécessaire que le dispositif d'assurage soit sécurisant en proposant un freinage modulable de la corde lors de la descente du grimpeur et/ou présente un blocage assisté. Il est également important que le dispositif d'assurage procure un blocage efficace de la corde et de préférence un blocage en réponse à un coulissement de la corde représentatif d'une chute. Il est également intéressant que le dispositif d'assurage soit tolérant à une mauvaise manipulation et surtout qu'il ne soit pas trop complexe à manipuler.

Il existe des dispositifs d'assurage à came qui possèdent une came montée mobile en pivotement. La came pivote entre une première position où la corde est pincée entre la came et une zone de blocage et une deuxième position où la distance entre la came et la zone de blocage est supérieure au diamètre de la corde ce qui permet le glissement de la corde. La corde circule à l'intérieur de l'assureur et glisse le long de la came ce qui introduit un frottement. La forme de la came et la forme du chemin de circulation de la corde dans l'assureur permettent de définir l'intensité du frottement de la corde. Pour fournir de la corde au grimpeur, il est nécessaire d'acquérir une certaine dextérité afin d'éviter de faire tourner la came et ainsi bloquer le coulissement de la corde. L'intensité du frottement évolue en fonction du diamètre de la corde et de son usure. La demanderesse commercialise un dispositif de ce genre sous la dénomination GRIGRI ^{®}.

Les deux contraintes techniques précitées sont assez contradictoires car pour fournir un freinage modulable ou un blocage assisté de la corde, il est nécessaire d'avoir un élément en contact continu avec la corde et avec un frottement suffisant pour détecter les conditions de circulation de la corde dans l'assureur et l'on souhaite réduire le frottement lorsque l'on fournit de la corde au grimpeur. Il y a donc un compromis à réaliser entre sécurité et praticité d'usage lors de la réalisation de l'assureur.

Le compromis est d'autant plus difficile à trouver que l'assureur doit également être utilisé pour assurer en « moulinette », c'est-à-dire que le grimpeur est assuré au moyen d'une corde qui passe par le sommet de la voie. Au fur et à mesure que le grimpeur monte dans la voie, on avale de la corde alors que l'on effectue l'opération inverse pour un grimpeur qui monte en tête. Il est donc recherché un déplacement de la corde qui n'entraine pas un blocage systémique de la corde.

### Exposé de l'invention

Un objet de l'invention consiste à fournir un dispositif de blocage de corde muni d'une came mobile qui présente des fonctionnements mieux adaptés aux différentes phases de grimpe selon que le grimpeur monte « en tête » ou en « moulinette ».

On tend à résoudre ces inconvénients au moyen d'un dispositif de blocage de corde comportant :
- un corps possédant une butée ;
- un premier arbre de pivotement fixé au corps ;
- une came de blocage montée à pivotement autour du premier arbre de pivotement, la came de blocage étant montée mobile par rapport à la butée entre une première position et une deuxième position, la deuxième position étant plus éloignée de la butée que la première position ;
- un premier ressort ayant une première extrémité et une deuxième extrémité, l'une de la première extrémité et de la deuxième extrémité étant liée fonctionnellement à la came de blocage par un premier appui et l'autre de la première extrémité et de la deuxième extrémité étant liée fonctionnellement au corps par un deuxième appui ;
- une poignée montée mobile par rapport au corps et fixée à la came de blocage pour faire pivoter la came de blocage.

Le dispositif de blocage est remarquable en ce qu'un commutateur est fixé au corps et est monté mobile par rapport au corps entre une position de déverrouillage et une position d'actionnement.

Lorsque le commutateur est dans la position d'actionnement, le premier ressort s'oppose à un pivotement de la came de blocage dans un sens correspondant à un éloignement entre la came de blocage et la butée.

Lorsque le commutateur est dans la position de déverrouillage, le premier ressort ne s'oppose pas un pivotement de la came de blocage dans un sens correspondant à un éloignement entre la came de blocage et la butée ou s'oppose à un pivotement de la came de blocage dans un sens correspondant à un rapprochement entre la came de blocage et la butée.

Dans la position de déverrouillage, le commutateur supprime l'un du premier appui et du deuxième appui ou intervertit le premier appui et le deuxième appui.

Selon un aspect de l'invention, lorsque le commutateur est dans la position de déverrouillage et que la came de blocage est dans la deuxième position, la came de blocage n'est pas liée fonctionnellement au premier ressort de sorte que la came de blocage se déplace indépendamment du premier ressort.

De manière préférentielle, le commutateur possède un obstacle coinçant la deuxième extrémité du premier ressort à distance de la came de blocage.

Avantageusement, lorsque la came de blocage est dans la première position, la deuxième extrémité du premier ressort empêche le déplacement du commutateur depuis la position d'actionnement jusqu'à la position de déverrouillage.

Dans un mode de réalisation particulier, lorsque la came de blocage est dans la deuxième position, la deuxième extrémité du premier ressort empêche le déplacement du commutateur depuis la position d'actionnement jusqu'à la position de déverrouillage.

Préférentiellement, lorsque la came de blocage est dans une troisième position, la deuxième extrémité du premier ressort autorise le déplacement du commutateur depuis la position d'actionnement jusqu'à la position de déverrouillage, la troisième position étant plus éloignée de la butée que la deuxième position.

De manière avantageuse, lorsque la came de blocage est dans la première position, la deuxième extrémité du premier ressort empêche le déplacement du commutateur depuis la position de déverrouillage jusqu'à la position d'actionnement et/ou lorsque la came de blocage est dans la deuxième position, la deuxième extrémité du premier ressort empêche le déplacement du commutateur depuis la position de déverrouillage jusqu'à la position d'actionnement.

Dans un mode de réalisation particulier, le dispositif de blocage comporte une commande montée mobile entre une position de blocage et une position de déblocage. Dans la position de blocage, la commande bloque le commutateur dans la position d'actionnement.

Selon un autre aspect, le premier ressort est un ressort de torsion traversé par le premier arbre de pivotement.

Préférentiellement, le commutateur est monté pivotant autour du premier arbre de pivotement. Dans la position d'actionnement, un pion du commutateur est disposé en appui contre la première extrémité du premier ressort et à distance de la deuxième extrémité du premier ressort. Dans la position de verrouillage, le pion du commutateur est disposé en appui contre la deuxième extrémité du premier ressort et à distance de la première extrémité du premier ressort.

De manière préférentielle, lorsque le commutateur est dans la position d'actionnement et que la came de blocage est dans la première position, la première extrémité et la deuxième extrémité définissent un angle inférieur à 90° et le pion du commutateur est disposé entre la première extrémité et la deuxième extrémité, dans la surface définie par l'angle.

De manière préférentielle, le dispositif de blocage comporte un deuxième ressort ayant une première extrémité fixée à la came de blocage et une deuxième extrémité fixée au corps, le deuxième ressort appliquant une force s'opposant au pivotement du premier ressort depuis la troisième position jusqu'à la première position, le deuxième ressort ayant une raideur inférieure à une raideur du premier ressort.

L'invention a également pour objet un procédé d'utilisation d'un dispositif de blocage qui permet de mieux gérer les déplacements de la corde à l'intérieur du dispositif de blocage selon que le grimpeur grimpe en tête ou en moulinette.

On tend à atteindre ce résultat au moyen d'un procédé d'utilisation d'un dispositif de blocage de corde comportant les étapes suivantes :
- fournir un dispositif de blocage selon l'une quelconque des configurations précédentes ;
- introduire une corde dans le dispositif de blocage ;
- déplacer un commutateur entre une position de déverrouillage et une position d'actionnement.

### Description des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1 illustre une vue schématique, en perspective, d'un premier mode de réalisation d'un dispositif de blocage de corde avec un commutateur dans la position d'actionnement ;
- la figure 2 illustre une vue schématique, en perspective, d'un premier mode de réalisation d'un dispositif de blocage de corde ouvert pour l'insertion d'une corde entre deux flasques ;
- la figure 3 illustre une vue explosée d'un premier mode de réalisation d'un dispositif de blocage de corde ;
- la figure 4 illustre une vue schématique, en élévation, d'un premier mode de réalisation d'un dispositif de blocage de corde avec un commutateur dans la position d'actionnement ;
- la figure 5 illustre une vue schématique, en coupe à l'intérieur d'un capot, d'un premier mode de réalisation d'un dispositif de blocage de corde avec un commutateur dans la position d'actionnement ;
- la figure 6 illustre une vue schématique, en élévation, d'un premier mode de réalisation d'un dispositif de blocage de corde avec un commutateur dans la position de d'actionnement et la came de blocage dans la troisième position ;
- la figure 7 illustre une vue schématique, en coupe à l'intérieur d'un capot, d'un premier mode de réalisation d'un dispositif de blocage de corde avec un commutateur dans la position de d'actionnement et la came de blocage dans la troisième position ;
- la figure 8 illustre une vue schématique, en élévation, d'un premier mode de réalisation d'un dispositif de blocage de corde avec un commutateur dans la position déverrouillage et la came de blocage dans la troisième position ;
- la figure 9 illustre une vue schématique, en coupe à l'intérieur d'un capot, d'un premier mode de réalisation d'un dispositif de blocage de corde avec un commutateur dans la position déverrouillage et la came de blocage dans la troisième position ;
- la figure 10 illustre une vue schématique, en élévation, d'un premier mode de réalisation d'un dispositif de blocage de corde avec un commutateur dans la position déverrouillage et la came de blocage dans la deuxième position ;
- la figure 11 illustre une vue schématique, en coupe à l'intérieur d'un capot, d'un premier mode de réalisation d'un dispositif de blocage de corde avec un commutateur dans la position déverrouillage et la came de blocage dans la deuxième position ;
- la figure 12 illustre une vue explosée d'un deuxième mode de réalisation d'un dispositif de blocage de corde ;
- la figure 13 illustre une vue schématique, en élévation, d'un deuxième mode de réalisation d'un dispositif de blocage de corde avec un commutateur dans la position d'actionnement ;
- la figure 14 illustre une vue schématique, en coupe à l'intérieur d'un capot, d'un deuxième mode de réalisation d'un dispositif de blocage de corde avec un commutateur dans la position d'actionnement ;
- la figure 15 illustre une vue schématique, en élévation, d'un deuxième mode de réalisation d'un dispositif de blocage de corde avec un commutateur dans la position de d'actionnement et la came de blocage dans la troisième position ;
- la figure 16 illustre une vue schématique, en coupe à l'intérieur d'un capot, d'un deuxième mode de réalisation d'un dispositif de blocage de corde avec un commutateur dans la position de d'actionnement et la came de blocage dans la troisième position ;
- la figure 17 illustre une vue schématique, en élévation, d'un deuxième mode de réalisation d'un dispositif de blocage de corde avec un commutateur dans la position déverrouillage et la came de blocage dans la troisième position ;
- la figure 18 illustre une vue schématique, en coupe à l'intérieur d'un capot, d'un deuxième mode de réalisation d'un dispositif de blocage de corde avec un commutateur dans la position déverrouillage et la came de blocage dans la troisième position ;
- la figure 19 illustre une vue schématique, en élévation, d'un deuxième mode de réalisation d'un dispositif de blocage de corde avec un commutateur dans la position déverrouillage et la came de blocage dans la deuxième position ;
- la figure 20 illustre une vue schématique, en coupe à l'intérieur d'un capot, d'un deuxième mode de réalisation d'un dispositif de blocage de corde avec un commutateur dans la position déverrouillage et la came de blocage dans la deuxième position ;
- la figure 21 illustre une vue explosée d'un troisième mode de réalisation d'un dispositif de blocage de corde ;
- la figure 22 illustre une vue schématique, en élévation, d'un troisième mode de réalisation d'un dispositif de blocage de corde avec un commutateur dans la position d'actionnement et une commande mobile dans la position de blocage ;
- la figure 23 illustre une vue schématique, en coupe à l'intérieur d'un capot, d'un troisième mode de réalisation d'un dispositif de blocage de corde avec un commutateur dans la position d'actionnement et une commande mobile dans la position de blocage ;
- la figure 24 illustre une vue schématique, en élévation, d'un troisième mode de réalisation d'un dispositif de blocage de corde avec un commutateur dans la position d'actionnement et une commande mobile dans la position de déblocage ;
- la figure 25 illustre une vue schématique, en coupe à l'intérieur d'un capot, d'un troisième mode de réalisation d'un dispositif de blocage de corde avec un commutateur dans la position d'actionnement et une commande mobile dans la position de déblocage ;
- la figure 26 illustre une vue schématique, en élévation, d'un troisième mode de réalisation d'un dispositif de blocage de corde avec un commutateur dans la position de d'actionnement, la came de blocage dans la troisième position et une commande mobile dans la position de déblocage ;
- la figure 27 illustre une vue schématique, en coupe à l'intérieur d'un capot, d'un troisième mode de réalisation d'un dispositif de blocage de corde avec un commutateur dans la position de d'actionnement, la came de blocage dans la troisième position et une commande mobile dans la position de déblocage ;
- la figure 28 illustre une vue schématique, en élévation, d'un troisième mode de réalisation d'un dispositif de blocage de corde avec un commutateur dans la position déverrouillage, la came de blocage dans la troisième position et une commande mobile dans la position de déblocage ;
- la figure 29 illustre une vue schématique, en coupe à l'intérieur d'un capot, d'un troisième mode de réalisation d'un dispositif de blocage de corde avec un commutateur dans la position déverrouillage, la came de blocage dans la troisième position et une commande mobile dans la position de déblocage ;
- la figure 30 illustre une vue schématique, en élévation, d'un troisième mode de réalisation d'un dispositif de blocage de corde avec un commutateur dans la position déverrouillage, la came de blocage dans la deuxième position et une commande mobile dans la position de déblocage ;
- la figure 31 illustre une vue schématique, en coupe à l'intérieur d'un capot, d'un troisième mode de réalisation d'un dispositif de blocage de corde avec un commutateur dans la position déverrouillage, la came de blocage dans la deuxième position et une commande mobile dans la position de déblocage ;
- la figure 32 illustre une vue schématique, en élévation, d'un troisième mode de réalisation d'un dispositif de blocage de corde avec un commutateur dans la position déverrouillage, la came de blocage dans la deuxième position et une commande mobile dans la position de blocage ;
- la figure 33 illustre une vue schématique, en coupe à l'intérieur d'un capot, d'un troisième mode de réalisation d'un dispositif de blocage de corde avec un commutateur dans la position déverrouillage et la came de blocage dans la deuxième position et une commande mobile dans la position de blocage ;
- la figure 34 illustre une vue explosée d'un quatrième mode de réalisation d'un dispositif de blocage de corde ;
- la figure 35 illustre une vue schématique, en élévation, d'un quatrième mode de réalisation d'un dispositif de blocage de corde avec un commutateur dans la position d'actionnement ;
- la figure 36 illustre une vue schématique, en coupe à l'intérieur d'un capot, d'un quatrième mode de réalisation d'un dispositif de blocage de corde avec un commutateur dans la position d'actionnement ;
- la figure 37 illustre une vue schématique, en élévation, d'un quatrième mode de réalisation d'un dispositif de blocage de corde avec un commutateur entre la position de d'actionnement et la position de déverrouillage ;
- la figure 38 illustre une vue schématique, en coupe à l'intérieur d'un capot, d'un quatrième mode de réalisation d'un dispositif de blocage de corde avec un commutateur entre la position d'actionnement et la position de déverrouillage ;
- la figure 39 illustre une vue schématique, en élévation, d'un quatrième mode de réalisation d'un dispositif de blocage de corde avec un commutateur dans la position de déverrouillage et la came de blocage dans la troisième position ;
- la figure 40 illustre une vue schématique, en coupe à l'intérieur d'un capot, d'un quatrième mode de réalisation d'un dispositif de blocage de corde avec un commutateur dans la position de déverrouillage et la came de blocage dans la troisième position.

### Description détaillée

Le dispositif de blocage de corde comporte un corps 1 muni d'une butée 2. La butée 2 forme une zone de blocage où un brin de corde A est destiné à être bloqué. Le dispositif de blocage de corde comporte un premier arbre de pivotement 3 qui est fixé au corps 1, de préférence qui est monté fixement au corps 1. Le corps 1 définit un chemin destiné à recevoir un brin de corde.

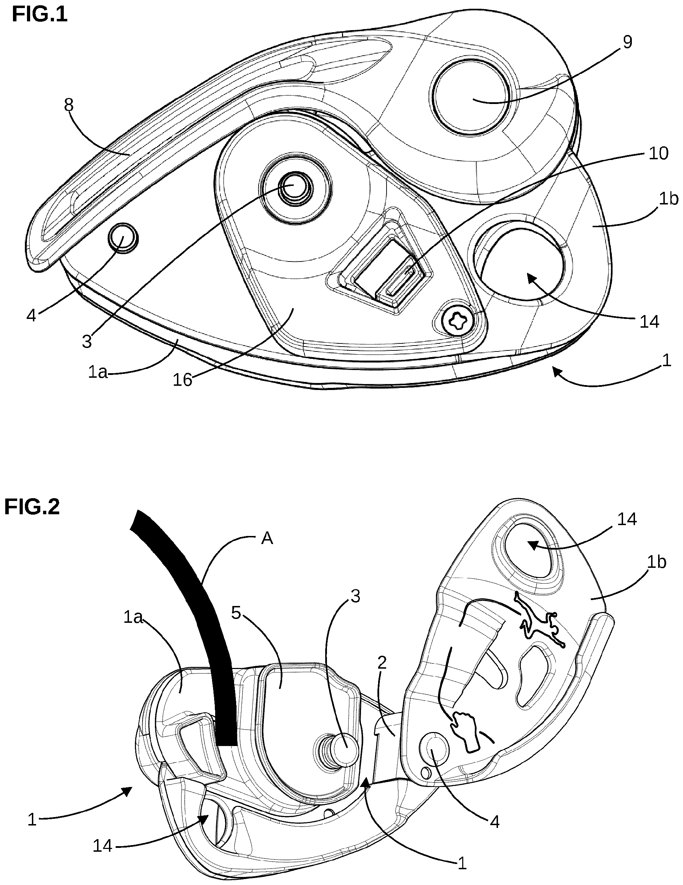

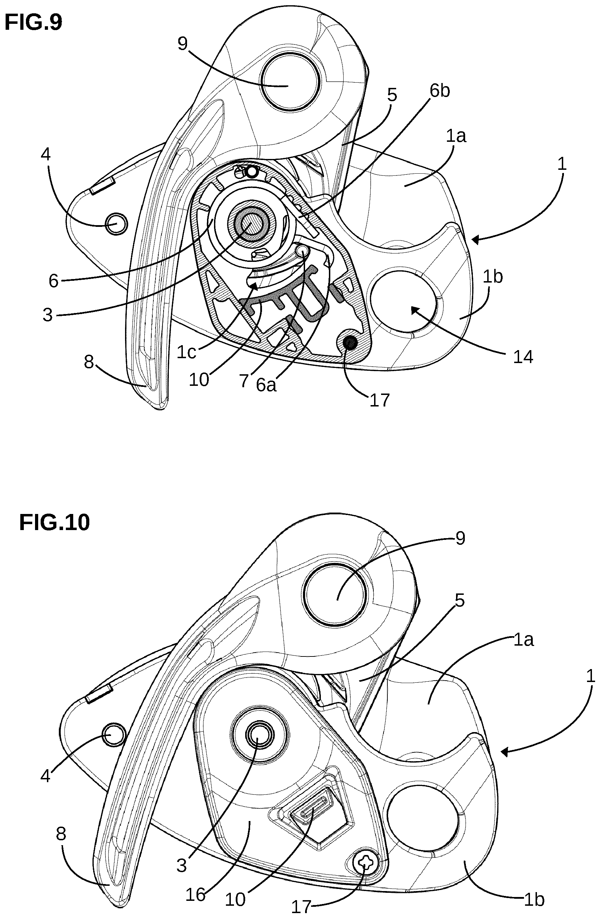

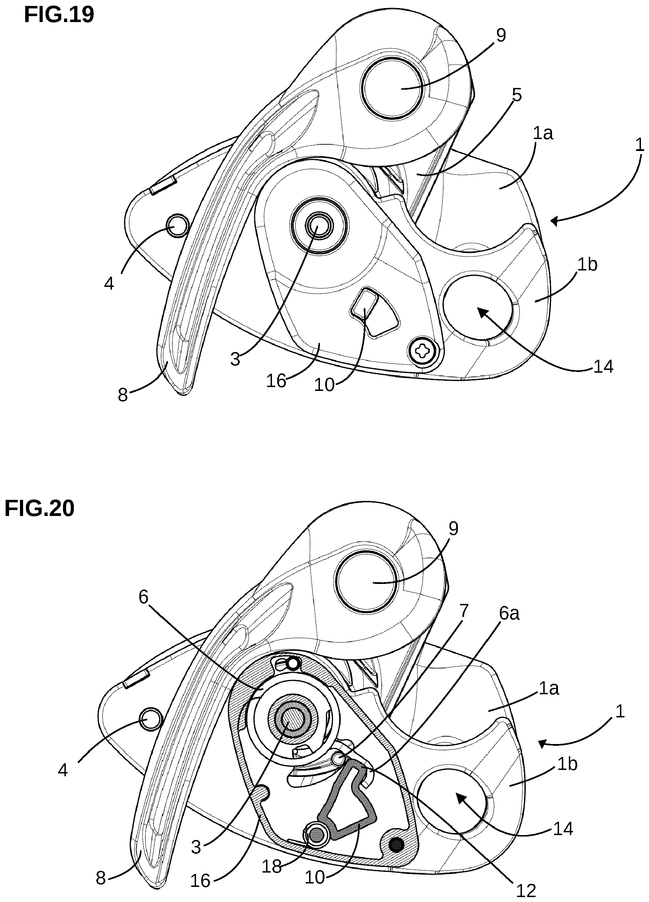

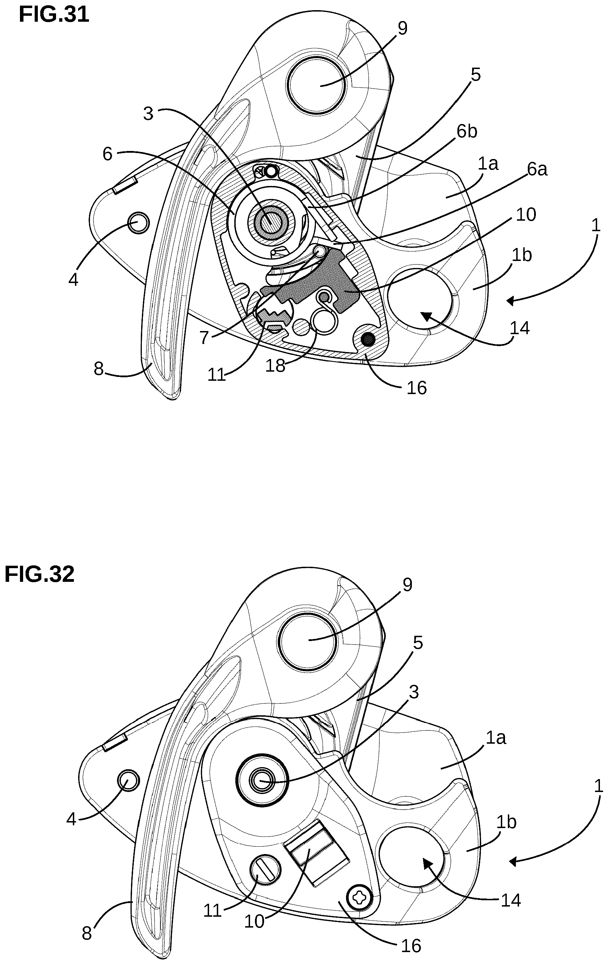

Dans un mode de réalisation particulier, le corps 1 possède un premier flasque 1a et un deuxième flasque 1b qui est monté mobile ou démontable par rapport au premier flasque 1 a. Les figures 1, 4 à 11, 13 à 20, 22 à 33 et 35 à 40 illustrent un corps fermé, c'est-à-dire avec les deux flasques qui délimitent une cavité destinée à recevoir un brin de corde A. La figure 2 illustre un corps ouvert avec le deuxième flasque 1b décalé par rapport au premier flasque 1a. Dans les modes de réalisation illustrés, le deuxième flasque 1b est monté pivotant par rapport au premier flasque 1a. Le deuxième flasque 1b est monté à pivotement autour d'un arbre de pivotement de corps 4 fixé au premier flasque 1a. Dans une alternative de réalisation, le deuxième flasque 1b peut être monté à pivotement autour du premier arbre de pivotement 3.

Le dispositif de blocage de corde comporte une came de blocage 5 montée à pivotement autour du premier arbre de pivotement 3. La came de blocage 5 est montée mobile par rapport à la butée 2 entre une première position, une deuxième position et une troisième position. La troisième position de la came de blocage 5 est plus éloignée de la butée 2 que la deuxième position qui est plus éloignée de la butée 2 que la première position. La deuxième position est entre la première position et la troisième position. La première position est destinée à bloquer le brin de corde A qui circule dans le chemin à l'intérieur du corps 1. La came de blocage 5 pivote à l'intérieur du corps 1 pour s'éloigner ou se rapprocher de la butée 2. Dans les deuxième et troisième positions, la came de blocage 5 est destinée à autoriser un glissement de la corde A à l'intérieur du corps 1. Le chemin contourne la came de blocage 5 et une partie de la paroi latérale du chemin est formée par la came de blocage 5 de sorte que le coulissement de la corde A dans le corps 1 applique une force sur la came de blocage 5 qui incite à faire pivoter la came de blocage 5 dans un premier sens ou dans un deuxième sens.

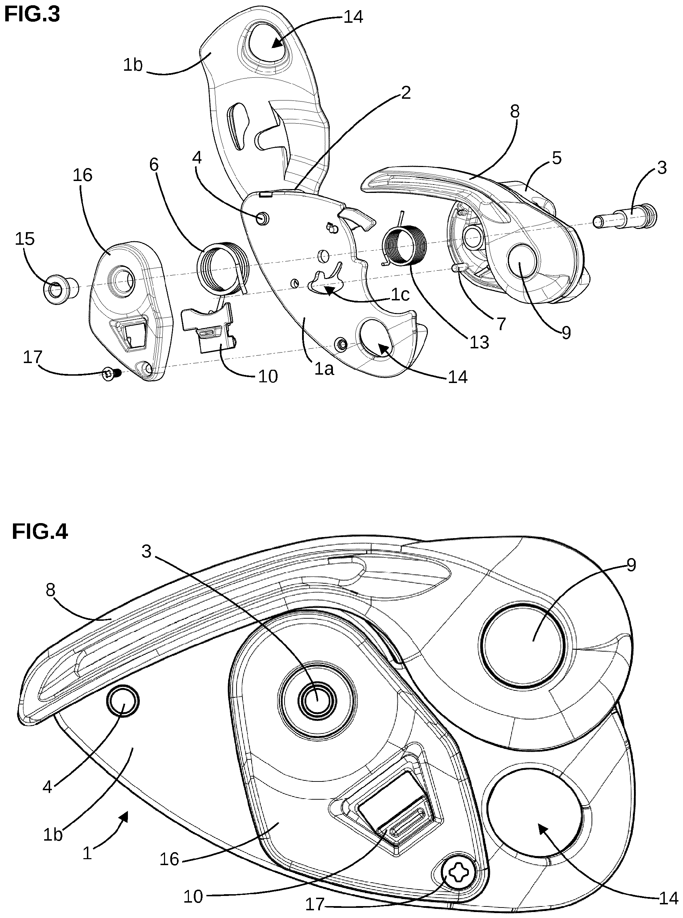

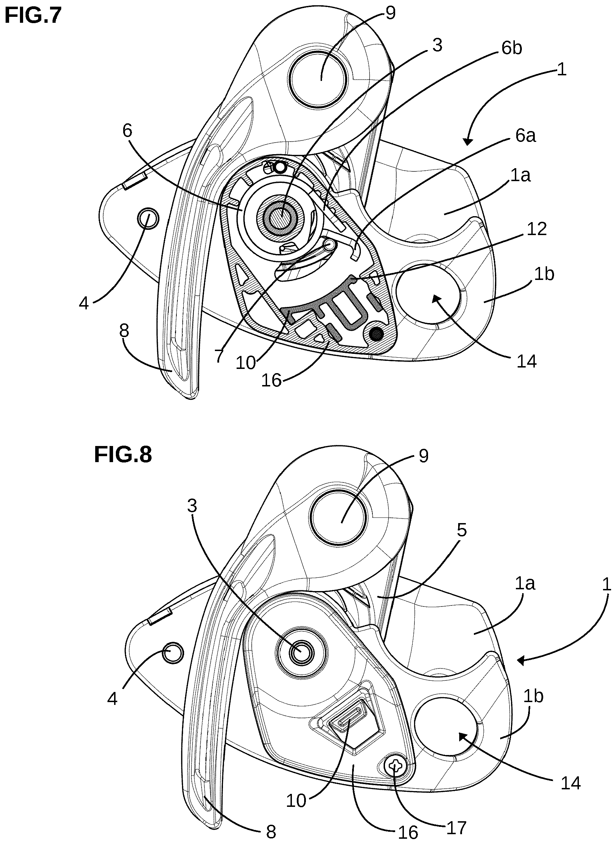

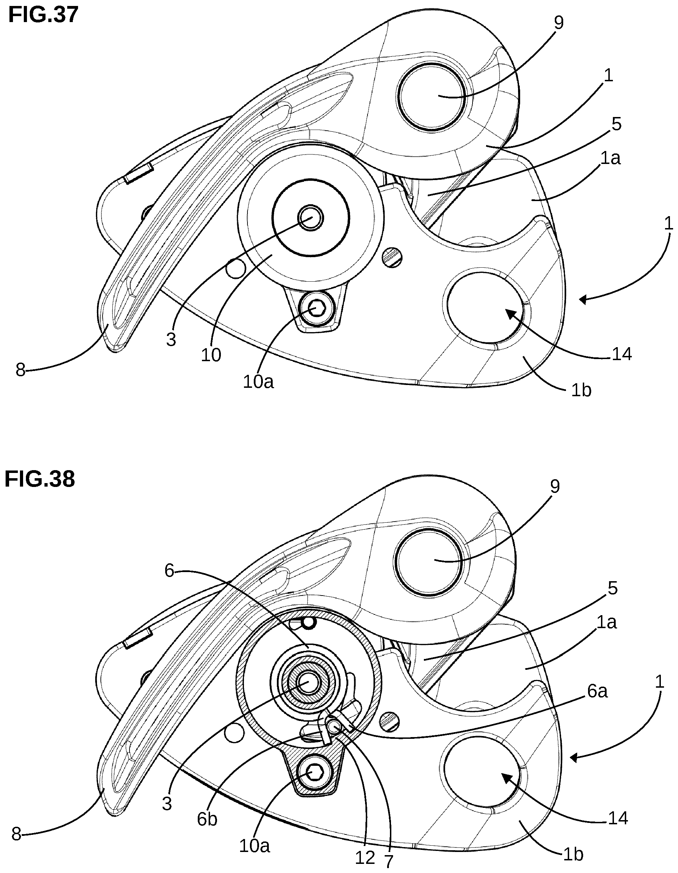

Les figures 4, 5, 13, 14, 22, 23, 24, 25, 35 et 36 illustrent la came de blocage 5 dans la première position. Les figures 37 et 38 illustrent la came de blocage 5 dans la deuxième position. Les figures 7, 8, 9, 10, 11, 15, 16, 17, 18, 19, 20, 26, 27, 28, 29, 30, 31, 32, 33, 39 et 40 illustrent la came de blocage 5 dans la troisième position.

Le dispositif de blocage comporte un premier ressort 6 ayant une première extrémité 6a et une deuxième extrémité 6b. L'une de la première extrémité 6a et de la deuxième extrémité 6b est liée fonctionnellement à la came de blocage 5 par une première liaison mécanique, par exemple un appui de la première extrémité 6a sur la came de blocage 5 ou une fixation. L'autre de la première extrémité 6a et de la deuxième extrémité 6b est liée fonctionnellement au corps 1 par une deuxième liaison mécanique par exemple un appui de la première extrémité 6a sur le corps 1 ou une fixation. Le premier ressort 6 est lié mécaniquement au corps 1 et à la came de blocage 5. Dans un mode de fonctionnement, le pivotement de la came de blocage 5 par rapport au corps 1 cause la déformation du premier ressort 6. En l'absence de sollicitation extérieure, le premier ressort 6 cherche à atteindre son état de moindre contrainte et déplace la came de blocage 5 dans la première position. En d'autres termes, le pivotement de la came de blocage 5 sollicite le premier ressort 6. Chaque position de la came de blocage 5 correspond à une déformation particulière du premier ressort 6. Plus la came de blocage 5 s'éloigne de la butée 2, plus la déformation du premier ressort 6 est importante, c'est-à-dire que plus la contrainte subie par le premier ressort 6 est éloignée de l'état de contrainte minimale.

Le premier ressort 6 est sollicité mécaniquement entre la première extrémité 6a et la deuxième extrémité 6b. La rotation de la came de blocage 5 applique un effort sur le premier ressort 6. Le premier ressort 6 applique un effort opposé qui tend à ramener la came de blocage 5 dans la première position.

Dans un mode de réalisation avantageux, le premier ressort 6 et la came de blocage 5 sont séparés par une partie du corps 1, par exemple par un du premier flasque 1 a et du deuxième flasque 1 b. Le corps 1 définit une lumière 1c et un pion 7 de la came de blocage 5 passe à travers la lumière 1c. Le pion 7 se déplace le long de la lumière 1c entre la première position et la troisième position.

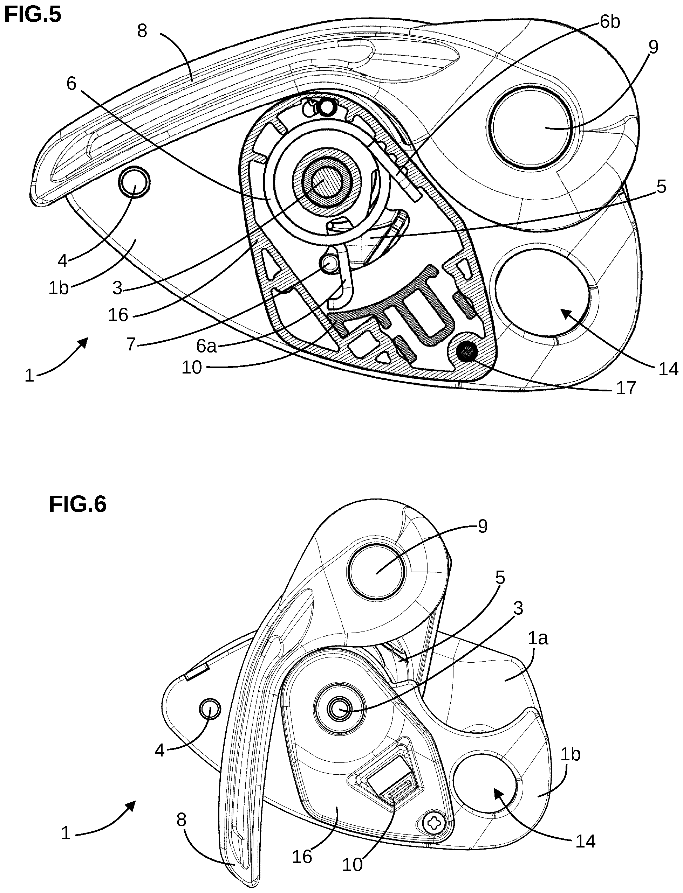

Préférentiellement, le pion 7 est en appui sur une extrémité de la lumière 1c lorsque la came de blocage 5 est dans la première position comme cela est illustré aux figures 5, 14, 23, 25 et 36. Préférentiellement, en l'absence de sollicitation extérieure, le premier ressort 6 applique un effort qui plaque le pion 7 contre une extrémité de la lumière 1c. En alternative, une extrémité du premier ressort 6 passe à travers la lumière 1c et est en appui contre une paroi latérale d'un trou de la came de blocage 5. Lorsque la came de blocage 5 quitte la première position, la paroi latérale appuie sur l'extrémité du premier ressort 6. Dans une autre alternative, le premier ressort 6 et la came de blocage 5 sont du même côté du flasque.

Une poignée 8 est fixée à la came de blocage 5, de préférence à distance de l'axe de pivotement de la came de blocage 5 par rapport au corps 1. La poignée 8 est montée mobile par rapport au corps 1 pour suivre le pivotement de la came de blocage 5. Préférentiellement, la poignée 8 est fixée à la came de blocage 5 au moyen d'un deuxième arbre de pivotement 9. Le deuxième arbre de pivotement 9 est monté stationnaire par rapport à la came de blocage 5 de manière à pivoter autour du premier arbre de pivotement 3. La poignée 8 peut être montée mobile entre une position de rangement et une position d'actionnement d'une manière qui est connue en soit. On passe de la position de rangement à la position d'actionnement en pivotant la poignée 8 selon un premier sens de pivotement. Sur les différentes figures, seule la position de rangement est illustrée. Dans la position d'actionnement, la poignée 8 est en butée contre la came de blocage 5 de sorte qu'une rotation de la poignée 8 selon le premier sens de pivotement cause la rotation de la came de blocage 5 en direction de la première position, c'est-à-dire dans une direction pour rapprocher la butée 2 et la came de blocage 5.

Le dispositif de blocage de corde comporte également un commutateur 10 qui est fixé au corps 1 et qui est monté mobile entre une position de déverrouillage et une position d'actionnement. Le comportement de la came de blocage 5 par rapport au corps 1 est différent selon que le commutateur 10 est dans la position de déverrouillage ou dans la position d'actionnement. Le commutateur 10 peut être monté en translation ou en pivotement ou selon tout autre mode de déplacement.

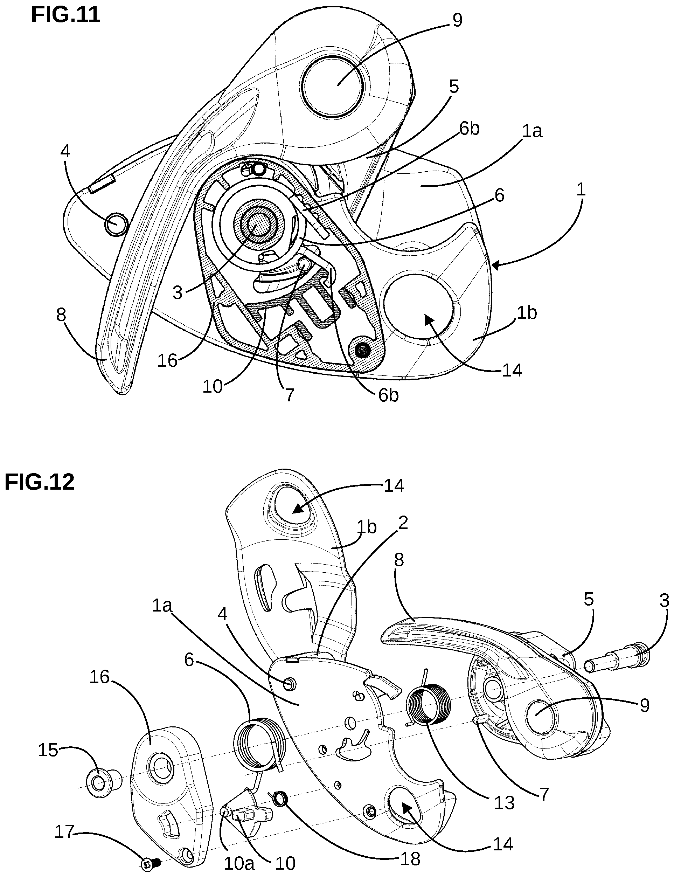

Les figures 1 à 11 illustrent un commutateur 10 monté mobile à translation alors que les figures 12 à 40 illustrent un commutateur 10 monté à pivotement. Dans les modes de réalisation illustrés, le commutateur 10 est monté mobile selon une direction de déplacement qui est perpendiculaire à l'axe de pivotement de la came de blocage 5 par rapport au corps 1. Cependant, une autre direction de déplacement est possible, par exemple selon l'axe de pivotement de la came de blocage 5.

Le commutateur 10 est monté mobile par rapport au premier ressort 6 de manière à modifier le comportement du premier ressort 6 selon que le commutateur 10 est dans la position de déverrouillage ou dans la position d'actionnement. Dans la position d'actionnement, le premier ressort 6 s'oppose à un pivotement de la came de blocage 5 dans un sens correspondant à un éloignement entre la came de blocage 5 et la butée 2. Le fonctionnement du ressort 6 est identique à ce qui est connu. Dans la position d'actionnement, le commutateur 10 ne modifie pas le fonctionnement du premier ressort 6 par rapport à ce qui est connu. En d'autres termes, le déplacement de la came de blocage 5 entraine la modulation de la déformation du premier ressort 6. Préférentiellement, dans la position d'actionnement, le premier ressort 6 est dépourvu de contact avec le commutateur 10 comme cela est illustré dans les modes de réalisation des figures 3 à 33. Dans la position de déverrouillage, le commutateur 10 supprime l'une de la première liaison mécanique et de la deuxième liaison mécanique, ou intervertit la première liaison mécanique et la deuxième liaison mécanique. Cela permet de modifier le comportement du premier ressort 6 ce qui permet de modifier le comportement de la came de blocage 5 par rapport aux déplacements de la corde A.

Dans la position de déverrouillage, le comportement du premier ressort 6 est modifié. Le premier ressort 6 n'applique pas un effort sur la came de blocage 5 qui s'oppose à un pivotement de la came de blocage 5 dans un sens correspondant à un éloignement entre la came de blocage 5 et la butée 2. Dans la position de déverrouillage, le commutateur 10 n'empêche pas le pivotement de la came de blocage 5 dans un sens ou dans l'autre.

Dans un mode de réalisation illustré aux figures 3 à 33, le premier ressort 6 est activé lorsque le commutateur 10 est dans la position d'actionnement, c'est-à-dire que la came de blocage 5 déforme le premier ressort 6 en fonction de son pivotement. Dans la position de déverrouillage, le commutateur 10 est apte à bloquer le premier ressort 6 dans un état de déformation correspondant à la came de blocage 5 dans la troisième position. De manière préférentielle, lorsque le commutateur 10 est dans la position de déverrouillage et que le premier ressort 6 est coincé dans un état de déformation correspondant à la came de blocage 5 dans la troisième position, le commutateur 10 supprime l'une de la première liaison mécanique et de la deuxième liaison mécanique. Dans le mode de réalisation illustré, le premier ressort 6 est bloqué dans un état de déformation maximal ou quasi-maximal.

Dans les modes de réalisation illustrés aux figures 1 à 33, dans la position de déverrouillage, le commutateur 10 supprime la liaison mécanique entre la came de blocage 5 et le premier ressort 6. Dans les modes de réalisation particuliers illustrés aux figures 1 à 33, la came de blocage 5 se déplace entre la première position et la deuxième position sans être en contact du premier ressort 6. Le déplacement de la came de blocage 5 n'applique aucune déformation sur le premier ressort 6. Dans les configurations illustrées, la première extrémité 6a est bloquée dans une position qui correspond à la came de blocage 5 dans la troisième position ou à distance des positions pouvant être prises par la came de blocage 5. Les figures 5 à 33 illustrent un mode de réalisation où la première extrémité 6a du premier ressort 6 est en appui sur le pion 7. Lorsque le premier ressort 6 est bloqué dans un état de déformation correspondant à la deuxième position ou à la troisième position, le déplacement de la came de blocage 5 entre la première position et la deuxième position s'effectue sans être au contact du premier ressort 6 ce qui élimine la liaison mécanique. Un résultat est identique avec l'alternative décrite plus haut où la came de blocage 5 définit une rainure qui reçoit la première extrémité du premier ressort 6.

De manière préférentielle, dans la position de déverrouillage, le commutateur 10 forme un obstacle 12 qui bloque l'extrémité du premier ressort 6 coopérant avec la came de blocage 5 à distance de la came de blocage 5. Dans les modes de réalisation illustrés aux figures 1 à 33, la came de blocage 5 possède un pion 7 qui se déplace dans une lumière du corps, il est avantageux de bloquer la première extrémité du premier ressort 6 à une extrémité de la lumière ou hors de la lumière de manière à autoriser un déplacement du pion 7 librement par rapport au premier ressort 6. Dans une alternative de réalisation, la première extrémité 6a du premier ressort 6 traverse le corps 1 pour s'introduire dans un trou de la came de blocage 5 et former la liaison mécanique. La première extrémité du premier ressort 6 vient en appui contre une paroi latérale de manière à pousser la came de blocage 5 vers la butée 2. Il est avantageux que la came de blocage 5 définisse une rainure et l'extrémité du premier ressort 6 se déplace à l'intérieur de la rainure en s'éloignant de la paroi latérale sans déplacer la came de blocage 5. Le blocage de la première extrémité 6a à distance de la paroi latérale permet d'avoir un déplacement de la came de blocage 5 sans action sur le premier ressort 6.

Dans une alternative de réalisation, dans la position d'actionnement, le commutateur 10 forme la liaison mécanique entre le premier ressort 6 et le corps 1, par exemple une paroi d'appui pour la deuxième extrémité 6b du premier ressort 6. Dans la position de déverrouillage, le commutateur 10 interrompt la liaison mécanique entre le premier ressort 6 et le corps 1. Lorsque la came de blocage 5 pivote entre la première position et la troisième position, le premier ressort 6 pivote sans se déformer. Le premier ressort 6 se déplace sans appliquer un effort s'opposant au déplacement de la came de blocage 5. Dans la position de déverrouillage, le commutateur 10 supprime la paroi d'appui supportant la deuxième extrémité 6b. Sans paroi d'appui, le déplacement de la came de blocage 5 ne cause plus la déformation du premier ressort 6 en fonction de la position de la came de blocage 5. Le déplacement de la came de blocage 5 entraine le déplacement de la première extrémité 6a et de la deuxième extrémité 6b. Il est avantageux que la première extrémité 6a soit montée fixement avec la came de blocage 5.

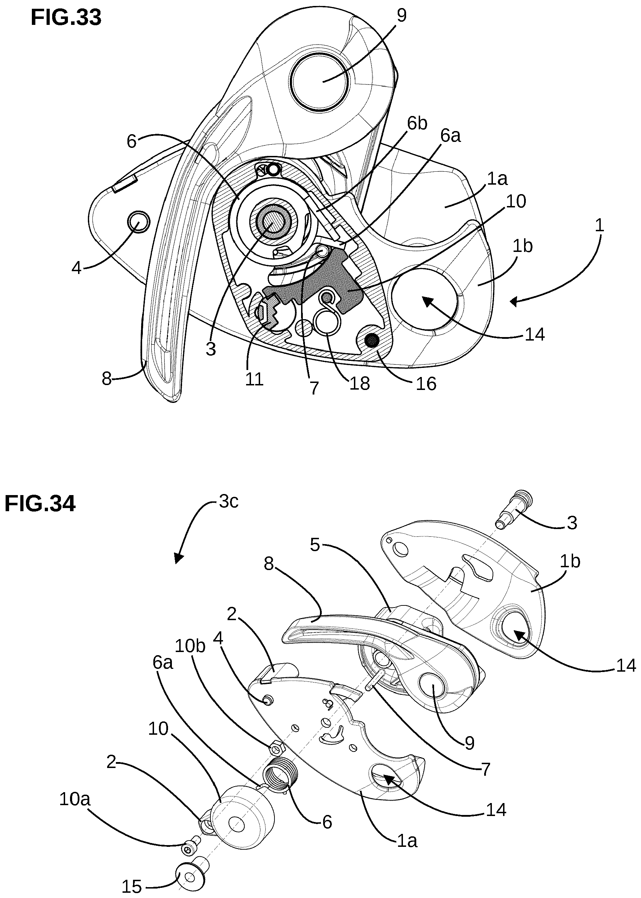

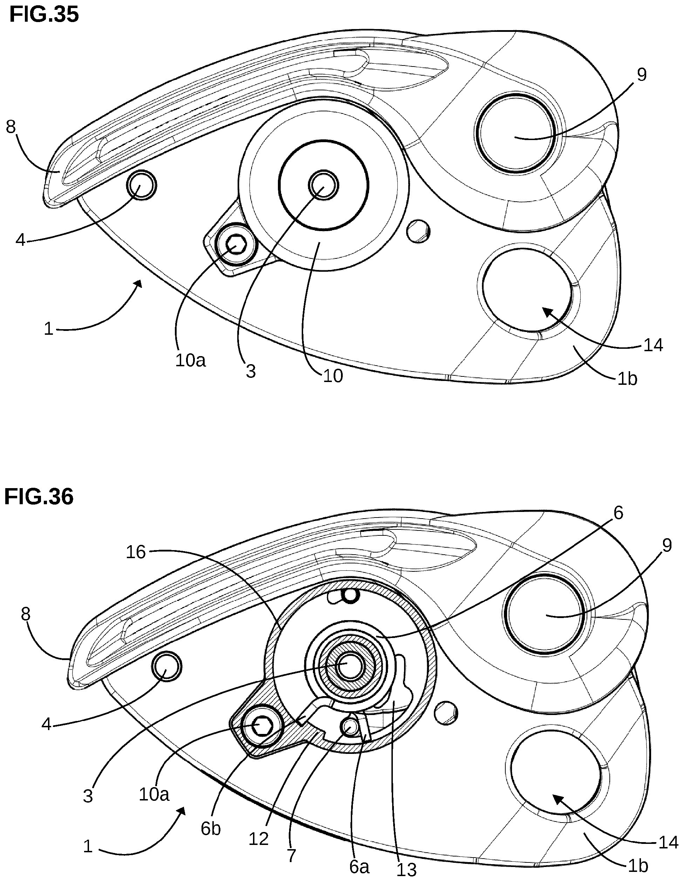

Dans une autre alternative de réalisation illustrée aux figures 34 à 40, le commutateur 10 intervertit la première liaison mécanique et la deuxième liaison mécanique lorsqu'il se déplace entre la position d'actionnement et la position de déverrouillage. Dans la position d'actionnement illustrée à la figure 36, le commutateur 10 forme un obstacle 12 et la deuxième extrémité 6b du premier ressort 6 est en appui contre l'obstacle 12. Le déplacement de la came de blocage 5 dans le premier sens de pivotement, par exemple depuis la première position jusqu'à la troisième position déforme le premier ressort 6. Par exemple, le déplacement avec un effort en traction ou selon un mouvement équivalent à un étirage du ressort. Dans la configuration illustrée, le déplacement de la came de blocage 5 selon le premier sens de pivotement correspond à un éloignement entre la première extrémité 6a et la deuxième extrémité 6b.

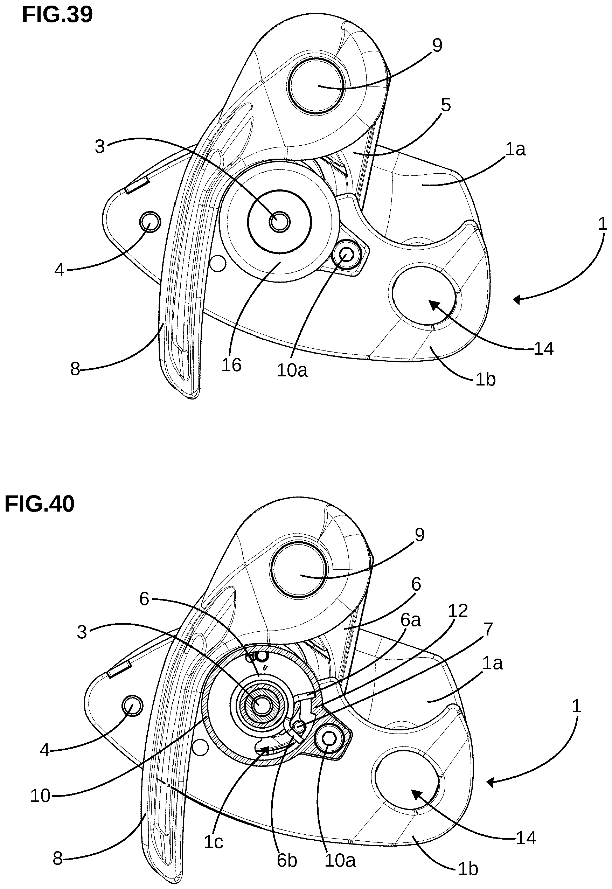

Dans la position de déverrouillage illustrée à la figure 40, le commutateur 10 forme un obstacle 12 et la première extrémité 6a du premier ressort 6 est en appui contre l'obstacle 12. La deuxième extrémité 6b est à distance de l'obstacle 12. Le déplacement de la came de blocage 5 dans le deuxième sens de pivotement, par exemple depuis la troisième position jusqu'à la première position déforme le premier ressort 6. Par exemple, le déplacement avec un effort en traction ou selon un mouvement équivalent à un étirage du ressort.

Dans le mode de réalisation illustré aux figures 34 à 40, l'obstacle 12 se déplace entre la première extrémité et la deuxième extrémité. Il est préférable que le pion 7 de la came de blocage 5 se déplace également entre la première extrémité et la deuxième extrémité et que la distance accessible au pion 7 soit inférieure à la distance parcourue par l'obstacle 12 entre la position d'actionnement et la position de déverrouillage. Cela permet de faire travailler le premier ressort 6 dans un sens ou dans un autre selon la position du commutateur 10.

Dans un mode de réalisation particulier, en l'absence de sollicitation extérieure, le déplacement du commutateur 10 de la position d'actionnement jusqu'à la position de déverrouillage entraine le pivotement de la came de blocage 5 depuis la première position jusqu'à la troisième position. Le commutateur 10 peut être maintenu en position par rapport au corps, au moyen d'un bloqueur 10a qui s'insère dans un renfoncement du corps pour éviter que la rotation de la poignée entraine un déplacement de la came de blocage 5 et du commutateur 10. Le bloqueur 10a peut être une vis ou une tige avec un moyen de rappel élastique. La figure 34 illustre une vis associée à un écrou de bloqueur 10b. La vis et l'écrou permettent de déplacer le bloqueur 10a pour s'enfoncer ou s'extraire des trous présents dans le corps 1 et qui permettent de bloquer le commutateur 10 dans l'une des deux positions.

Dans le mode de réalisation illustré aux figures 34 à 40, le pion 7 en saillie de la came de blocage 5 et l'obstacle 12 du commutateur 10 pivotent préférentiellement autour du même axe de pivotement.

L'activation ou la désactivation du premier ressort 6 peuvent être obtenues de différentes manière afin d'avoir une came de blocage 5 qui se déplace entre la première position et la troisième position en sollicitant ou sans solliciter le premier ressort 6. Dans les modes de réalisation illustrés aux figures 1 à 33, le premier ressort 6 est désactivé en étant maintenu dans une position contrainte à une extrémité ou hors du chemin de circulation du pion 7 représentatif du déplacement de la came de blocage 5. Un fonctionnement identique peut être obtenu avec une extrémité du premier ressort 6 qui s'enfonce dans une rainure de la came de blocage 5. Dans une alternative de réalisation, le commutateur 10 peut déplacer tout ou partie du premier ressort 6 selon une direction parallèle à l'axe de pivotement de la came de blocage 5 par rapport à la came de blocage 5 et préférentiellement par rapport au corps 1. Le déplacement du premier ressort 6 peut activer ou désactiver la liaison mécanique entre la came de blocage 5 et le premier ressort 6 en autorisant ou interdisant un contact mécanique entre une extrémité du premier ressort 6 et une portion de la came de blocage 5. Il peut en être de même en déplaçant le premier ressort 6 pour former ou éliminer une liaison élastique entre l'autre extrémité du premier ressort 6 et le corps 1.

Dans un souci de compacité, il est avantageux de ne pas déplacer tout le ressort de manière à désactiver le premier ressort 6.

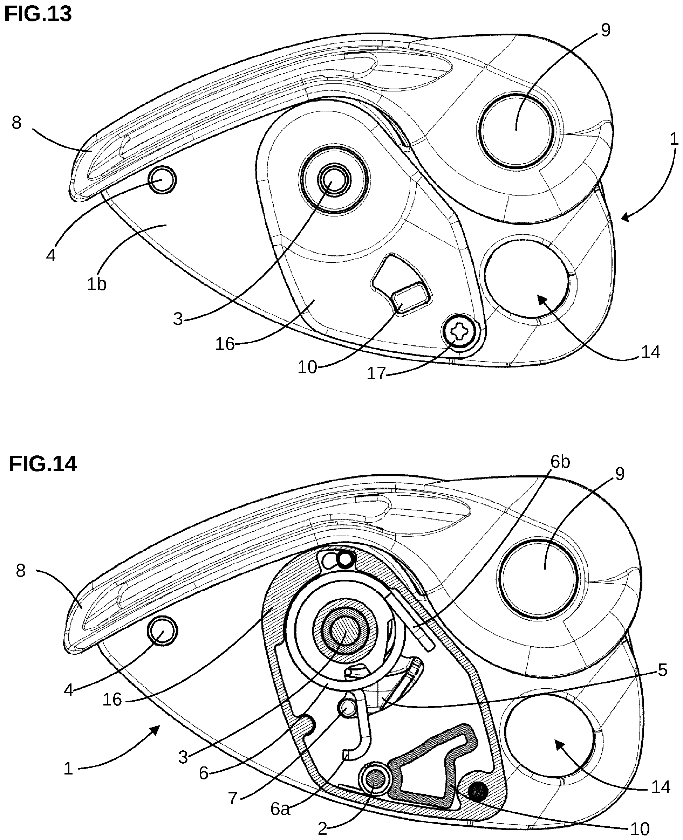

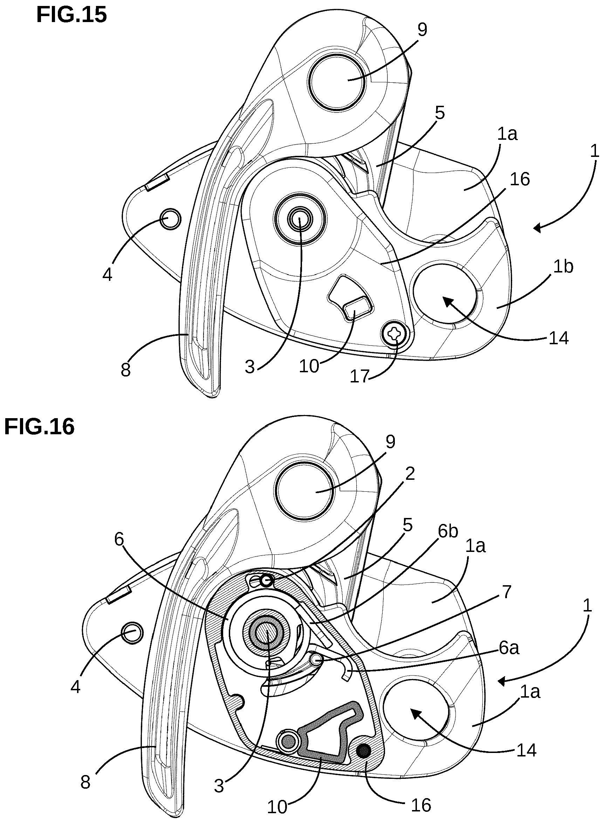

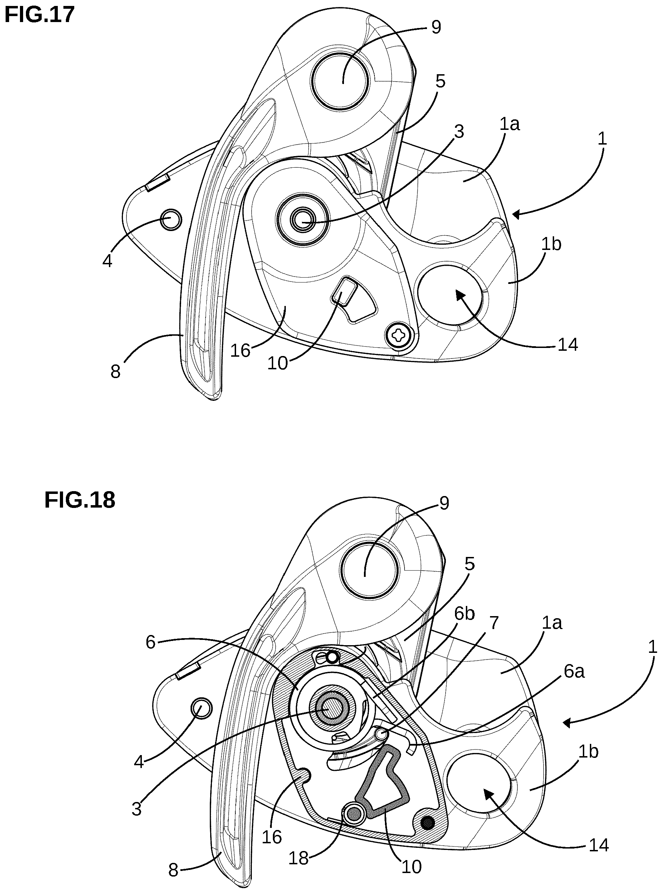

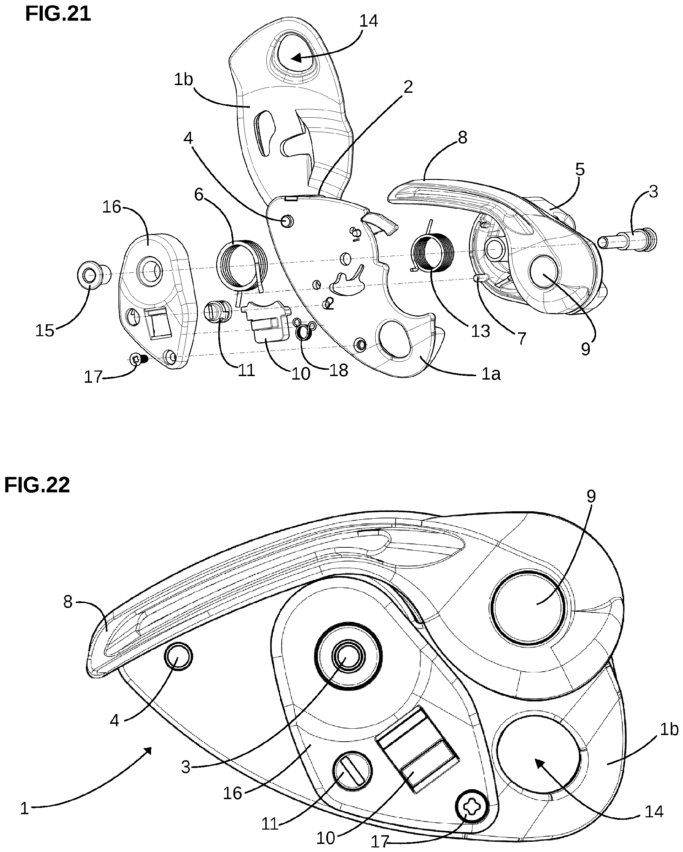

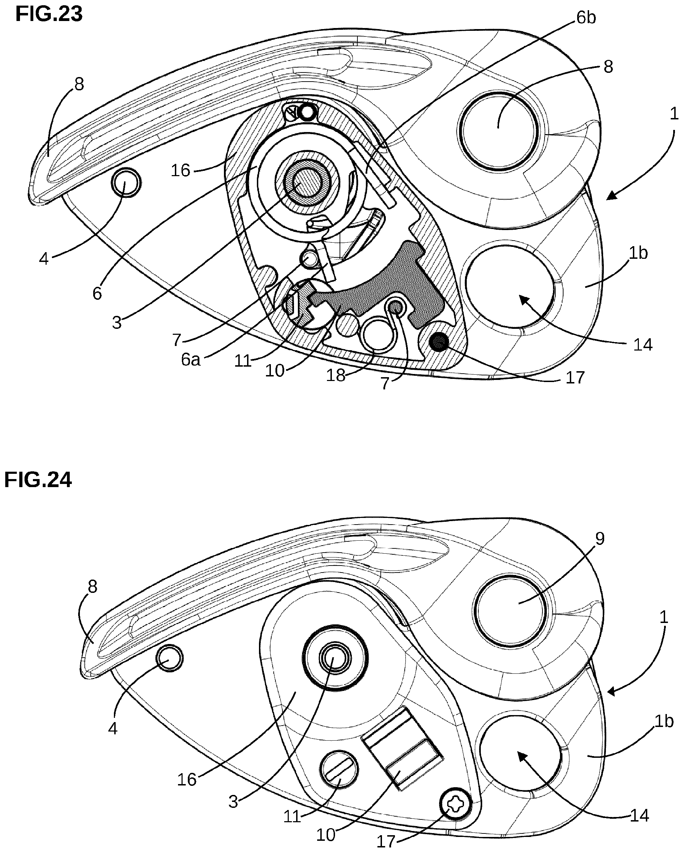

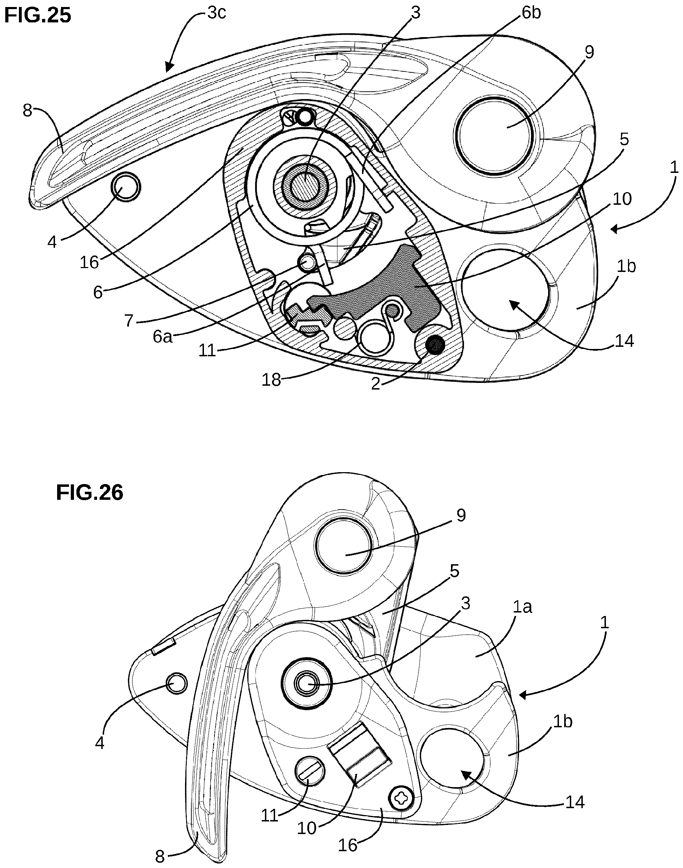

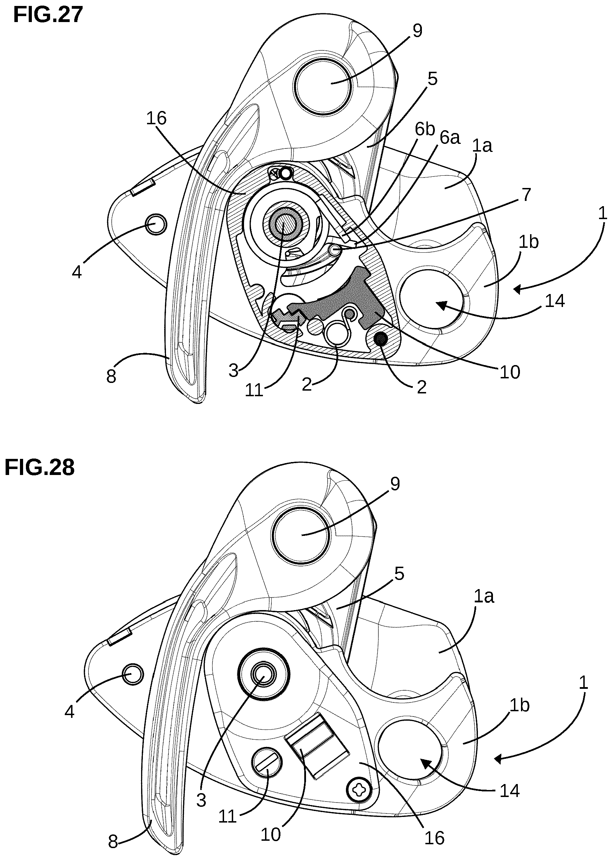

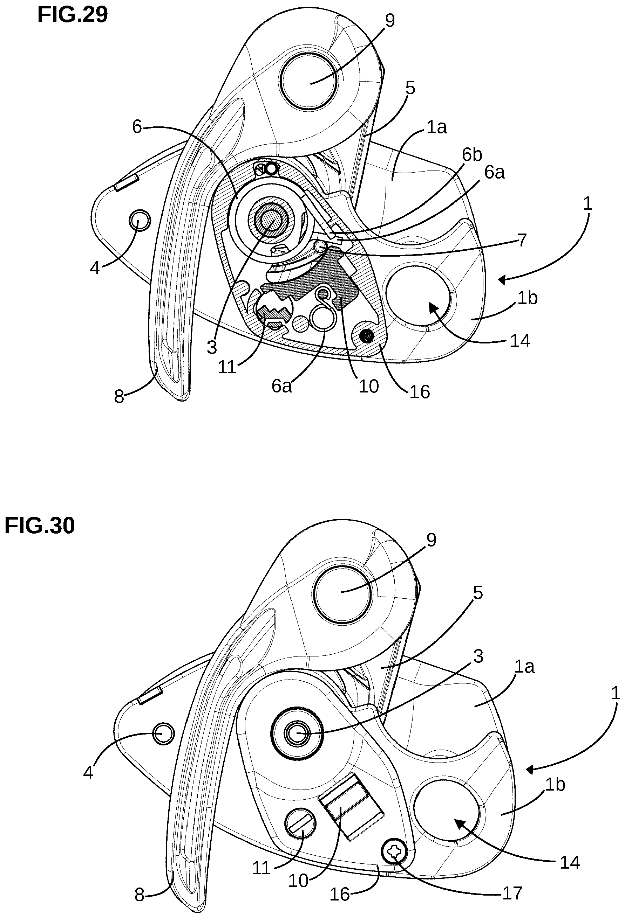

Dans un mode de réalisation avantageux, le commutateur 10 ne peut basculer de la position d'actionnement à la position de déverrouillage que lorsque la came de blocage 5 est hors de la première position, de préférence entre la deuxième position et la troisième position et plus préférentiellement uniquement dans la troisième position. Il est avantageux que lorsque la came de blocage 5 est dans la première position, la première extrémité 6a du premier ressort 6 empêche le déplacement du commutateur 10 depuis la position d'actionnement jusqu'à la position de déverrouillage. Cette précaution évite un actionnement non désiré du commutateur 10. Le premier ressort 6 sollicitant la came de blocage 5 dans la première position, il est nécessaire d'agir sur le pivotement de la came de blocage 5 préalablement au déplacement du commutateur 10 dans la position de déverrouillage. Par exemple, dans la première position, la première extrémité 6a du ressort 6 s'oppose au déplacement du commutateur 10 jusqu'à la position de déverrouillage. Le cas échéant, il est préférable que le pion 7 s'oppose au déplacement du commutateur 10 jusqu'à la position de déverrouillage. Les figures 4 à 11 illustrent dans des vues de côté et des vus en coupe d'un capot 16 contenant le commutateur 10, le pivotement de la came de blocage 5 depuis la première position jusqu'à la troisième position (figures 4 à 7), puis le déplacement du commutateur 10 depuis la position d'actionnement jusqu'à la position de déverrouillage (figures 6 à 9), puis le pivotement de la came de blocage 5 depuis la troisième position jusqu'à la deuxième position avec le blocage de la première extrémité 6a du premier ressort 6 par le commutateur 10 (figures 8 à 11). Les figures 13 à 20 illustrent dans des vues de côté et des vus en coupe d'un capot 16 contenant le commutateur 10, le pivotement de la came de blocage 5 depuis la première position jusqu'à la troisième position (figures 13 à 16), puis le déplacement du commutateur 10 depuis la position d'actionnement jusqu'à la position de déverrouillage (figures 15 à 18), puis le pivotement de la came de blocage 5 depuis la troisième position jusqu'à la deuxième position avec le blocage de la première extrémité 6a du premier ressort 6 par le commutateur 10 (figures 17 à 20). Les figures 22 à 33 illustrent dans des vues de côté et des vus en coupe d'un capot 16 contenant le commutateur 10. Les figures 22 à 25 illustrent le basculement de la commande depuis la position de blocage jusqu'à la position de déblocage. Les figures 24 à 27 illustrent le pivotement de la came de blocage 5 depuis la première position jusqu'à la troisième position. Les figures 26 à 29 illustrent le déplacement du commutateur 10 depuis la position d'actionnement jusqu'à la position de déverrouillage. Les figures 28 à 31 illustrent le pivotement de la came de blocage 5 depuis la troisième position jusqu'à la deuxième position avec le blocage de la première extrémité 6a du premier ressort 6 par le commutateur 10. Les figures 30 à 33 illustrent le basculement de la commande depuis la position de déblocage jusqu'à la position de blocage.

Dans les modes de réalisation illustrés, le commutateur 10 est séparé de la came de blocage 5 par le flasque 1b. Il est possible que le premier ressort 6 et au moins une partie du commutateur 10 et la came de blocage 5 soient du même côté du flasque 1b.

Dans un mode de réalisation compatible avec les modes de réalisation illustrés aux figures 3 à 33, le commutateur 10 peut définir un biseau qui autorise un glissement de la première extrémité 6a du premier ressort 6 le long du biseau lorsque la came de blocage 5 se déplace depuis la première position jusqu'à la troisième position. Le biseau permet de surmonter l'obstacle 12 dans un seul sens de déplacement qui correspond au premier sens de pivotement. Une fois que la came de blocage 5 atteint la troisième position, la première extrémité 6a ne peut plus se déplacer dans l'autre sens et surmonter l'obstacle 12 du commutateur 10 qui est dans la position de déverrouillage. Par exemple le biseau peut interdire le passage de la position d'actionnement à la position de déverrouillage lorsque la came de blocage 5 est dans des positions prédéfinies, par exemple hors de la première position et de la troisième position. En alternative, le biseau est également incliné pour autoriser le passage de la position d'actionnement à la position de déverrouillage quelle que soit la position de la came de blocage 5.

Afin d'empêcher un déplacement non-recherché du commutateur 10 entre la position d'actionnement et la position de déverrouillage dans un sens ou dans un autre, il est avantageux que le dispositif de blocage soit pourvu d'une commande 11. La commande 11 est montée mobile entre une position de blocage et une position de déblocage. Il est préférable de monter la commande 10 sur le corps 1.

Comme cela est illustré à la figure 23, dans la position de blocage, la commande 11 bloque le commutateur 10 dans la position d'actionnement.

De manière préférentielle illustrée à la figure 33, dans la position de blocage, la commande 11 bloque le commutateur 10 dans la position de déverrouillage. La commande 11 peut être montée mobile selon un mouvement quelconque, par exemple en translation ou en pivotement. La commande 11 peut être montée mobile dans un plan perpendiculaire à l'axe de pivotement de la came de blocage 5 par rapport au corps 1 ou avec une composante selon la direction longitudinale de l'axe de pivotement de la came de blocage 5 par rapport au corps 1. Dans le mode de réalisation illustré, la commande 11 est montée pivotante selon un axe de pivotement parallèle à l'axe de pivotement de la came de blocage 5, mais un autre mouvement est possible.

Avantageusement, le premier ressort 6 est un ressort de torsion et plus préférentiellement il est traversé par le premier arbre de pivotement 3. L'actionnement du premier ressort 6 par la came de blocage 5 est facilité et il est plus facile d'activer et de désactiver le premier ressort 6 au moyen du commutateur 10. Un tel mode de réalisation est illustré aux figures 1 à 40. L'utilisation d'un ressort en torsion permet également une meilleure gestion des efforts lors du pivotement.

Dans le mode de réalisation illustré aux figures 34 à 40, le commutateur 10 est monté pivotant autour du premier arbre de pivotement 3. Le commutateur 10 possède un obstacle 12. Dans la position d'actionnement, l'obstacle 12 du commutateur 10 est disposé en appui contre la première extrémité 6a du ressort 6 et à distance de la deuxième extrémité 6b du ressort 6. Le pivotement de la came de blocage 5 dans le premier sens de pivotement déforme le premier ressort 6. Dans la position de verrouillage, l'obstacle 12 du commutateur 10 est disposé en appui contre la deuxième extrémité 6b du ressort 6 et à distance de la première extrémité 6a du premier ressort 6.

Ce mode de réalisation est particulièrement intéressant. Dans la position d'actionnement, le premier ressort 6 sollicite la came de blocage 5 dans le deuxième sens de pivotement, c'est-à-dire en direction de la butée, c'est-à-dire de manière à réduire la distance entre la butée 2 et la came de blocage 5. Le premier ressort 6 tend à bloquer la corde A qui se trouve disposée entre la butée 2 et la came de blocage 5. Cette configuration est particulièrement bien adaptée à l'assurage d'un grimpeur qui monte en tête. Dans la position de déverrouillage, le premier ressort 6 sollicite la came de blocage 5 dans le deuxième sens de pivotement. Le premier ressort 6 tend à faciliter le coulissement de la corde A qui se trouve disposée entre la butée 2 et la came de blocage 5 en déplaçant la came de blocage 5 vers la troisième position de blocage. Cela vise à augmenter la distance entre la butée 2 et la came de blocage 5. Cette configuration est bien adaptée à l'assurage d'un grimpeur qui est assuré par le haut de la voie. Le même premier ressort 6 applique deux efforts opposés sur la came de blocage 5 selon que le commutateur 10 est dans la position de déverrouillage ou d'actionnement.

Un fonctionnement similaire peut être obtenu avec les modes de réalisation illustrés aux figures 1 à 33 en utilisant un deuxième ressort 13 dont une première extrémité est fixée au corps 1 et une deuxième extrémité est fixée à la came de blocage 5. Le deuxième ressort 13 présente un fonctionnement opposé au premier ressort 6. Alors que le premier ressort 6 présente une position de moindre contrainte quand la came de blocage 5 est dans la première position, le deuxième ressort 13 présente une position de moindre contrainte quand la came de blocage 5 est dans la troisième position. Le deuxième ressort 13 applique un effort qui tend à déplacer la came de blocage 5 depuis la deuxième position ou la troisième position jusqu'à la première position. Le deuxième ressort 13 applique un effort qui tend à déplacer la came de blocage 5 depuis la première position jusqu'à la troisième position. La raideur du deuxième ressort 13 est inférieure à la raideur du premier ressort 6. Ainsi, lorsque le commutateur 10 est dans la position d'actionnement, le premier ressort 6 tend à déplacer la came de blocage 5 jusqu'à la première position en s'opposant aux efforts appliqués par le deuxième ressort 13.

Dans la position de déverrouillage, le premier ressort 6 est désactivé, c'est-à-dire qu'il n'applique plus d'effort sur la came de blocage 5 pour déplacer la came de blocage 5 vers la première position. Seul le deuxième ressort 13 applique un effort sur la came de blocage 5 ce qui tend à bloquer la came de blocage 5 dans la troisième position en l'absence de sollicitation extérieure.

Il est avantageux que le deuxième ressort 13 soit un ressort en torsion qui est traversé par le premier arbre de pivotement 3.

Dans les modes de réalisation illustrés, les deux flasques 1a et 1b définissent chacun un trou 14 qui est destiné à l'installation d'un connecteur ouvrable, de préférence un mousqueton. Une fois le mousqueton installé dans les deux trous, le dispositif de blocage ne peut pas être ouvert ce qui empêche l'installation ou le retrait d'un brin de corde A.

De manière préférentielle, le premier arbre de pivotement 3 est fixé au corps 1 au moyen d'un écrou 15. Par exemple, le premier arbre de pivotement 3 traverse le capot 16 et l'écrou 15 plaque le capot 16 contre le corps 1. Le capot 16 peut être fixé au corps 1 au moyen d'une deuxième vis 17.

Dans un mode de réalisation, un ressort de commutateur 18 est fixé d'une part au commutateur 10 et d'autre part au corps 1. Le ressort de commutateur 18 est préférentiellement monté de sorte que la position de moindre contrainte soit la position d'actionnement. Les modes de réalisation illustrés aux figures 12 à 33 représentent une implémentation du ressort de commutateur 18 pour un commutateur 10 qui se déplace en translation ou en pivotement.

## Revendications

1. Dispositif de blocage de corde comportant :
- un corps (1) possédant une butée (2) ;
- un premier arbre de pivotement (3) fixé au corps (1) ;
- une came de blocage (5) montée à pivotement autour du premier arbre de pivotement (3), la came de blocage (5) étant montée mobile par rapport à la butée (2) entre une première position et une deuxième position, la deuxième position étant plus éloignée de la butée (2) que la première position ;
- un premier ressort (6) ayant une première extrémité (6a) et une deuxième extrémité (6b), l'une de la première extrémité (6a) et de la deuxième extrémité (6b) étant liée fonctionnellement à la came de blocage (5) par un premier appui et l'autre de la première extrémité (6a) et de la deuxième extrémité (6b) étant liée fonctionnellement au corps (1) par un deuxième appui ;
- une poignée (8) montée mobile par rapport au corps (1) et fixée à la came de blocage (5) ;
- un commutateur (10) fixé au corps (1) et monté mobile par rapport au corps (1) entre une position de déverrouillage et une position d'actionnement ;
dans lequel lorsque le commutateur (10) est dans la position d'actionnement, la première extrémité (6a) est liée fonctionnellement à la came de blocage (5) par une première liaison mécanique représentée par un appui ou une fixation de la première extrémité (6a) avec la came de blocage (5) et la deuxième extrémité (6b) est liée fonctionnellement au corps (1) par une deuxième liaison mécanique représentée par un appui ou une fixation de la deuxième extrémité avec le corps (1), le pivotement de la came de blocage (5) modifiant une déformation du premier ressort (6), le premier ressort (6) s'opposant à un pivotement de la came de blocage (5) dans un sens correspondant à un éloignement entre la came de blocage (5) et la butée (2) ;
**caractérisé en ce que** lorsque le commutateur (10) est dans la position de déverrouillage, le commutateur (10) bloque le premier ressort (6) dans un état de déformation correspondant à la came de blocage (5) dans la troisième position ou le commutateur (10) interrompt la deuxième liaison mécanique pour que le premier ressort (6) pivote sans se déformer ;
ou **en ce que** lorsque le commutateur (10) est dans la position de déverrouillage, la première extrémité (6a) est liée fonctionnellement au corps (1) par une première liaison mécanique représentée par un appui ou une fixation de la première extrémité avec le corps (1) et la deuxième extrémité (6b) est liée fonctionnellement à la came de blocage (5) par une deuxième liaison mécanique représentée par un appui ou une fixation de la deuxième extrémité (6b) avec la came de blocage (5), la première extrémité (6a) étant en appui sur le commutateur (10) dans la position d'actionnement et la deuxième extrémité (6b) étant en appui sur le commutateur dans la position de déverrouillage, le premier ressort (6) s'opposant à un pivotement de la came de blocage (5) dans un sens correspondant à un rapprochement entre la came de blocage (5) et la butée (2).

2. Dispositif de blocage de corde selon la revendication 1 dans lequel lorsque le commutateur (10) est dans la position de déverrouillage, le commutateur (10) bloque le premier ressort (6) dans un état de déformation correspondant à la came de blocage (5) dans la troisième position ou le commutateur (10) interrompt la deuxième liaison mécanique pour que le premier ressort (6) pivote sans se déformer, dans lequel la came de blocage (5) comporte un pion (7) et le pion (7) traverse une lumière (1c) du corps (1) et dans lequel le pion (7) est en appui sur une extrémité de la lumière (1c) et lorsque la came de blocage (5) est dans la première position, le pion (7) est contre une extrémité de la lumière (1c).

3. Dispositif de blocage de corde selon la revendication 2 dans lequel lorsque la came de blocage (5) est dans la deuxième position, le pion (7) est contre une autre extrémité de la lumière (1c).

4. Dispositif de blocage selon la revendication 3 dans lequel le commutateur (10) forme un obstacle (12) monté mobile, l'obstacle (12) bloquant la première extrémité du premier ressort (6) à distance du pion (7) se déplaçant dans la lumière (1c) ou disposé à une extrémité de la lumière (1c) .

5. Dispositif de blocage selon l'une quelconque des revendications 1 à 4 comportant une commande (11) montée mobile entre une position de blocage et une position de déblocage et dans lequel, dans la position de blocage, la commande (11) bloque le commutateur (10) dans la position d'actionnement.

6. Dispositif de blocage selon l'une quelconque des revendications 1 à 5 dans lequel le premier ressort (6) est un ressort de torsion traversé par le premier arbre de pivotement (3).

7. Dispositif de blocage selon la revendication 6 dans lequel le commutateur (10) est monté pivotant autour du premier arbre de pivotement (3), dans lequel dans la position d'actionnement, un pion du commutateur (10) est disposé en appui contre la première extrémité (6a) du premier ressort (6) et à distance de la deuxième extrémité (6b) du premier ressort (6) et dans lequel dans la position de verrouillage, le pion du commutateur (10) est disposé en appui contre la deuxième extrémité (6b) du premier ressort (6) et à distance de la première extrémité (6a) du premier ressort (6).

8. Dispositif de blocage selon la revendication 7, dans lequel lorsque le commutateur (10) est dans la position d'actionnement et que la came de blocage (5) est dans la première position, la première extrémité (6a) et la deuxième extrémité (6b) définissent un angle inférieur à 90° et le pion du commutateur (10) est disposé entre la première extrémité (6a) et la deuxième extrémité (6b), dans la surface définie par l'angle.

9. Dispositif de blocage selon l'une quelconque des revendications 1 à 8 dans lequel lorsque le commutateur (10) est dans la position de déverrouillage, la première extrémité (6a) est liée fonctionnellement au corps (1) par une première liaison mécanique représentée par un appui ou une fixation de la première extrémité avec le corps (1) et la deuxième extrémité (6b) est liée fonctionnellement à la came de blocage (5) par une deuxième liaison mécanique représentée par un appui ou une fixation de la deuxième extrémité avec la came de blocage (5), la première extrémité (6a) étant en appui sur le commutateur dans la position d'actionnement et la deuxième extrémité étant en appui sur le commutateur (10) dans la position de déverrouillage, le premier ressort (6) s'opposant à un pivotement de la came de blocage (5) dans un sens correspondant à un rapprochement entre la came de blocage (5) et la butée (2).

10. Dispositif de blocage selon la revendication 9 comportant un deuxième ressort (13) ayant une première extrémité fixée à la came de blocage (5) et une deuxième extrémité fixée au corps (1), le deuxième ressort (13) appliquant une force s'opposant au pivotement du premier ressort (6) depuis la troisième position jusqu'à la première position, le deuxième ressort (13) ayant une raideur inférieure à une raideur du premier ressort (6).

11. Procédé d'utilisation d'un dispositif de blocage de corde comportant les étapes suivantes :
- fournir un dispositif de blocage selon l'une quelconque des revendications précédentes ;
- introduire une corde dans le dispositif de blocage ;
- déplacer un commutateur (10) entre une position de déverrouillage et une position d'actionnement.
